# EUROPÄISCHE PATENTSCHRIFT

(11) **EP 1 842 900 B1**
(45) Veröffentlichungstag und Bekanntmachung des Hinweises auf die Patenterteilung: **10.03.2010**
(21) Anmeldenummer: 07013641.1
(22) Anmeldetag: 28.01.2005
(51) Int. Cl.: C11D 11/00, C11D 17/00

(54) **Wasch- und/oder Reinigungsmitteltabletten**
Detergent Tablets
Comprimés détérgents

(30) Priorität: 03.04.2004 DE 102004016497
(43) Veröffentlichungstag der Anmeldung: 10.10.2007
(62) Teilanmeldung aus: 05707051.8
(73) Patentinhaber: Henkel AG & Co. KGaA, 40589 Düsseldorf (DE)
(72) Erfinder: Kruse, Hans-Friedrich, 41352 Korschenbroich (DE); Orlich, Bernhard, 40545 Düsseldorf (DE); Blasey, Gerhard, 40599 Düsseldorf (DE)

(56) Entgegenhaltungen:
- EP-A- 0 453 970
- EP-A1- 0 933 421
- WO-A-00/78907
- WO-A-00/78912
- WO-A-03/097784
- US-B1- 6 211 138
- BORCHERS G: "DESIGN AND MANUFACTURING OF SOLID DETERGENT PRODUCTS" JOURNAL OF SURFACTANTS AND DETERGENTS, AOCS PRESS, CHAMPAIGN, IL, US, Bd. 8, Nr. 2, April 2005 (2005-04), Seiten 123-128, XP001228385 ISSN: 0024-4201

## Beschreibung

Diese Anmeldung betrifft Waschmitteltabletten, die Granulate mit verzögerter Auflösung enthalten sowie die Verwendung solcher Waschmitteltabletten in Wasch- und Geschirrspülmaschinen.

Wasch- und/oder Reinigungsmittel stehen dem Verbraucher in fester wie in flüssiger Form zur Verfügung, wobei insbesondere die festen Wasch- und/oder Reinigungsmittel wiederum in unterschiedlichen Konfektionsformen, beispielsweise als Pulver oder Kompaktate (z.B. Extrudate, Tabletten) angeboten werden. Ausgangspunkt für die Herstellung dieser unterschiedlichen Konfektionsformen ist in der Regel mindestens ein aus wasch- und/oder reinigungsaktiven Rohstoffen hergestelltes Wasch- und/oder Reinigungsmittelgranulat, welches mit weiteren Inhaltsstoffen beispielsweise zu Pulvern vermischt oder durch Druckeinwirkung zu Extrudaten oder Tabletten verdichtet werden kann.

Granulationsverfahren sind im Stand der Technik breit beschrieben. Granulate können neben der herkömmlichen Sprühtrocknung durch Feuchtgranulierung, durch Trockengranulierung bzw. Kompaktierung und durch Schmelzerstarrungsgranulierung hergestellt werden. Die gebräuchlichste Granuliertechnik ist die Feuchtgranulierung, da diese Technik den wenigsten Einschränkungen unterworfen ist und am sichersten zu Granulaten mit günstigen Eigenschaften führt. Die Feuchtgranulierung erfolgt durch Befeuchtung der Pulvermischungen mit Lösungsmitteln und/oder Lösungsmittelgemischen und/oder Lösungen von Bindemitteln und/oder Lösungen von Klebstoffen und wird vorzugsweise in Mischern/Granulatoren, Wirbelbetten oder Sprühtürmen durchgeführt, wobei besagte Mischer/Granulatoren beispielsweise mit Rühr- und Knetwerkzeugen ausgestattet sein können. Für die Granulation sind jedoch auch Kombinationen von Wirbelbett(en) und Mischer(n)/Granulatoren, bzw. Kombinationen verschiedener Mischer/Granulatoren einsetzbar. Die Granulation erfolgt abhängig vom Ausgangsmaterial sowie den gewünschten Produkteigenschaften unter Einwirkung niedriger bis hoher Scherkräfte.

Die Aufgabe der Erfindung bestand darin, eine Möglichkeit zur Bereitstellung von Granulaten zur Verfügung zu stellen, bei welcher eine einfache Steuerung zumindest einer Granulateigenschaft bei der Granulatherstellung möglich ist.

Gelöst wird diese Aufgabe durch ein Verfahren zur Herstellung von Wasch- und/oder Reinigungsmittelgranulaten, durch Granulierung fester und flüssiger Komponenten unter Verwendung von einem oder mehreren Mischern/Granulatoren in einer ersten Verfahrensstufe mit nachgeschaltetem Wirbelschichtgranulator in einer zweiten Verfahrensstufe, wobei über die Aufteilung der Flüssigkomponente auf Mischer/Granulator und Wirbelschicht eine Einstellung der Granulatlöslichkeit vorgenommen wird. Wasch- und/oder Reinigungsmittelgranulate werden im Folgenden auch kurz als "Granulate" bezeichnet. Vorzugsweise wird über die Aufteilung der Flüssigkomponente auf Mischer/Granulator und Wirbelschicht auch eine Einstellung der Partikelgröße des Granulates vorgenommen.

Das hergestellte Granulat kann Bestandteil von Wasch- und/oder Reinigungsmittelformulierungen sein. Das Verfahren ermöglicht die Herstellung von Granulaten unterschiedlicher Eigenschaften und Zusammensetzung. Die Unterschiede können vorzugsweise die Komgrößenzusammensetzung und die Löslichkeit und somit auch eine Auflöseverzögerung der Granulate betreffen. Die unterschiedlichen Granulate können zu Wasch- und/oder Reinigungsmitteln abgemischt werden, die wiederum unterschiedliche Eigenschaften aufweisen können, die sich vorzugsweise aus denen der Granulate ableiten. Vorzugsweise können diese Fertigprodukte selbst dann unterschiedlich einstellbare Eigenschaften aufweisen, wenn sie die gleiche Zusammensetzung in Bezug auf die Gewichtsanteile der einzelnen Inhaltsstoffe aufweisen, sich aber in den wie oben beschrieben herzustellenden Granulaten unterscheiden.

Gegenstand der Erfindung ist eine Wasch- und/oder Reinigungsmitteltablette, enthaltend Sprengmittel und Wasch- und/oder Reinigungsmittelgranulate aus einem Verfahren, welches folgende Schritte umfasst:
a) Vermischen und Granulieren einer oder mehrer fester Komponenten mit einer oder mehreren flüssigen Komponenten in einem oder mehreren Mischern/Granulatoren, wobei die flüssige Komponente zumindest anteilsweise Aniontensidsäure enthält,
b) Überführen des in a) angefallenen Granulates in eine Wirbelschicht und Versprühen einer oder mehrer flüssiger Komponenten auf das in der Wirbelschicht gebildete Wirbelbett und weitere Granulation, **dadurch gekennzeichnet, daß** die in der Wirbelschicht zu versprühenden Komponenten Silikat- und/oder (Co-)Polymerlösungen, jedoch keine Aniontensidsäure enthalten.

Dabei werden unter flüssigen Komponenten auch solche verstanden, die bei Raumtemperatur per se nicht flüssig sind, jedoch bei der jeweiligen Verarbeitungstemperatur fließfähig sind, insbesondere aber jene, welche bei Raumtemperatur bereits flüssig sind. Zusätzlich kommen bevorzugt Flüssigkeiten zum Einsatz, die mit anderen Flüssigkeiten und / oder Feststoffen Reaktionen eingehen können. Hierbei handelt es sich vorzugsweise um Neutralisationsreaktionen von waschaktiven Bestandteilen.

Überraschenderweise wurde gefunden, daß bei der Granulierung fester und flüssiger Komponenten unter Verwendung eines Mischers/Granulators mit nachgeschaltetem Wirbelschichtgranulator eine Einstellung der Granulatlöslichkeit sowie vorzugsweise auch der Partikelgröße des Granulates über die Aufteilung der Flüssigkomponente auf Mischer/Granulator und Wirbelschicht vornehmbar ist. Es wurde festgestellt, daß sich die Granulatlöslichkeit dann immer weiter verbessert, wenn die im gesamtem Verfahren zum Einsatz kommenden Flüssigkomponenten in steigendem Maße im Mischer/Granulator und in sinkendem Maße in der Wirbelschicht zugegeben werden. Vorzugsweise erhält man dann auch feinteiligere Granulate.

Beim Herstellungsverfahren der Wasch- und/oder Reinigungsmittelgranulate werden die einzelnen Verfahrensstufen bevorzugt kontinuierlich durchlaufen.

In der ersten Verfahrensstufe des Verfahrens werden insbesondere bekannte, übliche feste und flüssige Bestandteile von Wasch- und/oder Reinigungsmitteln in an sich üblicher Weise granuliert, wobei alle bekannten Mischer, Granulatoren und/oder Verdichter eingesetzt werden können. Beispielsweise können Apparate der Firmen Vomm, Lödige, Schugi, Eirich, Henschel oder Fukae eingesetzt werden.

Dabei ist es möglich, die Granulierung in einem Mischer/Granulator oder in mehreren hintereinandergeschalteten Mischern/Granulatoren, welche gegebenenfalls unterschiedliche Misch- und Granuliergeschwindigkeiten aufweisen, durchzuführen. In einer bevorzugten Ausführungsform wird die erste Verfahrensstufe in zwei hintereinandergeschalteten Mischern/Granulatoren durchgeführt. Dabei ist es vorteilhaft, wenn zunächst in einem Hochgeschwindigkeitsmischer/Granulator ein Vorgranulat erstellt wird und anschließend gegebenenfalls unter Zugabe weiterer fester und flüssiger Bestandteile die weitere Granulierung und Verdichtung in einem langsamer laufenden Mischer/Granulator erfolgt. Die Verweilzeit im Hochgeschwindigkeitsmischer/Granulator liegt vorzugsweise unter 1 Minute, insbesondere deutlich unter 1 Minute, während die Verweilzeiten in den bevorzugt kontinuierlich arbeitenden langsameren Granulatoren vorzugsweise bei bis zu mehreren Minuten, vorteilhafterweise zwischen 1 und 10 Minuten, in weiter vorteilhafter Weise zwischen 2 und 8 Minuten, insbesondere aber zwischen 3 und 5 Minuten liegen.

Insbesondere ist jedoch auch eine Verfahrensführung bevorzugt, die zwei hintereinandergeschaltete Mischer/Granulatoren verwendet, wobei zunächst der langsamer laufende Mischer/Granulator und anschließend der Hochgeschwindigkeitsmischer/Granulator eingesetzt werden, wie sie beispielsweise auch in dem europäischen Patent EP 0 642 576 B1 beschrieben wird.

Die Zugabe der festen und flüssigen Bestandteile im ersten Verfahrensschritt kann in beliebiger Reihenfolge erfolgen. Vorzugsweise werden jedoch die flüssigen Bestandteile auf die bereits im Mischer/Granulator befindlichen, durch Mischwerkzeuge oder durch die Rotation der Mischertrommel bewegte Feststoffe versprüht. Zu den flüssigen Bestandteilen zählen auch bei der jeweiligen Verarbeitungstemperatur pumpfähige und insbesondere versprühbare flüssige Komponenten.

Der zweite Verfahrensschritt erfolgt in einer Wirbelschicht. Flüssigkeiten werden durch Versprühen, vorzugsweise feinstverteilt auf das fluidisierte Granulat der ersten Verfahrerisstufe aufgetragen. Die Fluidisierung des Granulates erfolgt mit Luft, die je nach Art der Verfahrensvariante und der Flüssigkomponente unterschiedliche Temperatur aufweisen kann.

Als weitere Einflussgröße zur Einstellung der gewünschten Löslichkeit der Granulate wurde im Verfahren die Positionierung der Düsen in der Wirbelschicht gefunden.

Ein Verfahren, bei welchem die Düsen des Wirbelschichtgranulators oberhalb des fluidisierten Produkt positioniert sind und in Durchflussrichtung der Wirbelschicht sprühen, ist eine bevorzugte Ausführungsform dieser Erfindung. Durch diese Verfahrensweise lässt sich die Korngröße des Granulates und die Granulatlöslichkeit, im Vergleich zu einer Verfahrensweise bei der die Düsen entgegengesetzt der Durchflussrichtung der Wirbelschicht und/oder innerhalb der fluidisierten Schicht sprühen, gezielt herabsetzen.

Zeichnet sich das Verfahren also dadurch aus, daß die Verdüsung entgegen der Durchflussrichtung der Wirbelschicht und/oder im fluidisierten Produkt erfolgt, liegt ebenfalls eine bevorzugte Ausführungsform vor.

Folgerichtig sind Positionierungen der Düsen, bei denen gröbere Granulate mit heraufgesetzter Löslichkeit erhalten werden, ebenfalls bevorzugte Ausführungsformen.

Gemäß einer bevorzugten Ausführungsform werden die erhaltenen Granulate in einem Aufbereitungsschritt mit weiteren teilchenförmigen Bestandteilen von Wasch- und/oder Reinigungsmitteln vermischt.

Vorteilhafterweise können alle bekannten Inhaltsstoffe von Wasch- und/oder Reinigungsmitteln in dem Verfahren zum Einsatz kommen, insbesondere auch dadurch, daß die erhaltenen Granulate in einem Aufbereitungsschritt mit weiteren Bestandteilen von Wasch- und/oder Reinigungsmitteln vermischt werden. Insbesondere ist der Einsatz von anionischen und nichtionischen Tensiden, aber auch von Kationtensiden, Amphotensiden und zwitterionischen Tensiden, anorganischen und organischen Buildersubstanzen, Bleichmitteln, alkalischen und neutralen Salzen, Ver-grauungsinhibitoren, Enzymen und Enzymstabilisatoren und üblichen Kleinkomponenten, wie optischen Aufhellern und Farb- und Duftstoffen bevorzugt, sowohl im Granulat und/oder als zumischbarer Bestandteil. Die festen Bestandteile können als Pulver und/oder Granulate in das Verfahren eingebracht werden, beispielsweise bei der Granulation und/oder als zumischbarer Bestandteil. Bei den festen Ausgangsstoffen, die beispielsweise in Pulverform eingesetzt werden, handelt es sich beispielsweise um Zeolith, insbesondere Zeolith A und/oder P, Natriumcarbonat, Tripolyphosphat, amorphe oder kristalline Silikate oder Natriumsulfat. In einer weiteren bevorzugten Ausführungsform der Erfindung werden als feste Bestandteile auch Compounds eingesetzt, die mehr als einen Wirkstoff enthalten. Hierzu gehören beispielsweise sprühgetrocknete Pulver (sogenannte Turmpulver), aber auch konzentrierte Tensidgranulate, beispielsweise solche, die 40 bis 95 Gew.-% an Alkylsulfaten und/oder Alkylbenzolsulfonaten enthalten.

Es ist vorteilhaft, die Granulate mit weiteren festen Bestandteilen, Pulvern, Granulaten und festen Compounds aufzubereiten. Die Wasch- und/oder Reinigungsmittelinhaltsstoffe können also im Granulat oder in dem Granulat zuzumischenden Bestandteilen oder in beiden enthalten sein.

Ein bevorzugter Gegenstand der Erfindung ist eine Wasch- und/oder Reinigungsmitteltablette gemäß Anspruch 1, wobei in dem Herstelungsverfahren der Wasch- und/oder Reinigungsmittelgranulate die in der Wirbelschicht zu versprühenden Komponenten tensidfrei sind und vorzugsweise zumindest anteilsweise filmbildende Bestandteile aufweisen.

Unter filmbildendern Bestandteil werden hier alle tensidfreien Stoffe oder Mischungen verstanden, die in der Lage sind, auf Substratoberflächen Filme zu bilden, z.B. dadurch, daß sie zuerst gelöst in einem Lösungsmittel (Wasser, Ethanol oder andere) vorliegen, auf das Substrat aufgetragen oder aufgesprüht werden und nach dem Verdunsten des Lösemittels Filme bilden. Beispielsweise können die filmbildenden Komponenten auch in einem schmelzflüssigen Zustand auf das Substrat aufgetragen oder aufgesprüht werden, so daß diese Komponenten beim Erstarren auf dem Substrat einen Film bilden. Besonders bevorzugte filmbildende Komponenten sind ganz allgemein Silikat und/oder (Co-)-Polymerlösungen. Weiterhin sind bevorzugt Acrylsäure-(Co-)Polymere, Cellulose-Derivate, Vinylpyrrolidon-Vinylacetat-Copolymerisate in unterschiedlichem Mengenverhältnis, Polymerisate auf Basis von Vinylpyrrolidon-Vinylacetat und Vinylpropionat, Polyethylenoxid-Harze, Polyvinylacetat, Polyvinylalkohol und Eiweiß-Hydrolysate. Filmbildner auf Basis natürlicher Harze sind z. B. entfärbter Schellack, Sandarak-Harz, Benzoeharze und Kolophonium.

Vorteilhafterweise resultieren in dieser Verfahrensvariante Granulate, die zwar gut löslich sind, aber in Relation zu den bisher genannten, beziehungsweise in den Beispielen als "nicht erfindungsgemäß" bezeichneten Granulaten weniger löslich sind, da in der Wirbelschicht eine aniontensidfreie, insbesondere tensidfreie Komponente um das Granulat gebildet wird, die bei der Anwendung zunächst gelöst werden muß, bevor das Tensid enthaltende Granulatkorn selbst in Lösung geht. Damit gelingt eine weitere Differenzierung des Löslichkeitsverhaltens der Granulate, die z. B. im Hinblick auf eine kontrollierte Aktivstofffreisetzung ("controlled release") sehr vorteilhaft ist.

Wenn die flüssige Komponente des Verfahrensschrittes a) ausgewählt ist aus der Gruppe flüssige Bindemittel, Lösungen von wasch- und/oder reinigungsaktiven Substanzen und/oder Dispersionen, vorzugsweise Suspensionen und/oder Emulsionen, von wasch- und/oder reinigungsaktiven Substanzen, wobei die Aniontensidsäure in sehr vorteilhafter Weise eine oder mehrere Substanz(en) aus der Gruppe der Carbonsäuren, der Schwefelsäurehalbester und der Sulfonsäuren, in besonders vorteilhafter Weise aus der Gruppe der Fettsäuren, der Fettalkylschwefelsäuren und der Alkylarylsulfonsäuren, insbesondere aus der Gruppe der C₈₋₁₆-, insbesondere der C₉₋₁₃-Alkylbenzolsulfonsäuren enthält, so liegt eine bevorzugte Ausführungsform der Erfindung vor.

Sind die festen Komponenten für den Einsatz in Wasch- und/oder Reinigungsmitteln geeignet und werden vorzugsweise zumindest anteilsweise Substanzen ausgewählt aus der Gruppe der Gerüststoffe, Polymere und/oder Neutralsalze eingesetzt, wobei vorteilhafterweise wenigstens anteilsweise feste Neutralisationsmittel, in sehr vorteilhafterweise eine oder mehrere Substanzen aus der Gruppe Natriumcarbonat, Natriumhydroxid, Natriumsesquicarbonat, Kaliumhydroxid und/oder Kaliumcarbonat enthalten sind, dann liegt ebenfalls eine bevorzugte Ausführungsform der Erfindung vor.

Enthalten die festen Komponenten Feststoffe aus der Gruppe der Silikate, Aluminiumsilikate, Sulfate, Citrate und/oder Phosphate enthalten, so handelt es sich um eine bevorzugte Ausführungsform der Erfindung.

Ist die keine Aniontensidsäure enthaltende, insbesondere tensidfreie flüssige Komponente des Verfahrensschrittes b) ausgewählt aus der Gruppe der flüssigen Bindemittel und/oder der wässrigen Lösung oder wässrigen Dispersion eines oder mehrerer nicht-tensidischer Wasch- und/oder Reinigungsmittelinhaltsstoffe, wie vorzugsweise amorphe Silikate, Carbonate, Sulfate, und/oder organische Salze wie Phosphonate, Polycarboxylate, insbesondere Citrat, und/oder polymere Polycarboxylate, wobei insbesondere Silikat- und/oder (Co-)Polymerlösungen besonders bevorzugt sind, dann liegt gleichfalls eine bevorzugte Ausführungsform der Erfindung vor.

Die Granulate vorgenannter Art können mit weiteren festen Bestandteilen zu einem vorzugsweise teilchenförmigen Wasch- und/oder Reinigungsmittel abgemischt werden.

In einer bevorzugten Ausführungsform enthält das Wasch- und/oder Reinigungsmittel dabei mehrere Granulate aus mehreren Verfahrensvarianten, also mit verschiedenen Löslichkeitsprofilen.

Um die erwünschte Zusammensetzung zu erhalten, sind vorteilhafterweise ergänzend zu dem Granulat auch übliche Aufbereitungskomponenten sowie vorzugsweise ein weiteres oder weitere Zumischgranulate in der Abmischung enthalten.

Die Mischung der Granulate, der weiteren teilchenförmigen/festen Wasch- und/oder Reinigungsmittelbestandteile und/oder der Zumischgranulate wird als (teilchenförmiges) Wasch- und/oder Reinigungsmittel bezeichnet.

Der Einsatz dieser Zumischgranulate ist vorteilhaft, um insbesondere weitere Aniontensidanteile und/oder um insbesondere (Co-)Polymer(e) und/oder Wasserglas in das Wasch- und/oder Reinigungsmittels zu inkorporieren.

Das zusätzliche Zumischgranulat enthält somit vorzugsweise solche Bestandteile, die in dem ersten Granulat gänzlich fehlen und/oder vorzugweise auch weitere solche Bestandteile, die zwar schon im ersten Granulat enthalten sind, deren Anteil bezogen auf die Gesamtzusammensetzung des gesamten Wasch- und/oder Reinigungsmittels aber zur Rezepturoptimierung erhöht werden kann oder muß. Neben üblichen Trägersubstanzen wie vorzugsweise Sulfat, Soda, Tripolyphosphat oder Zeolithen kann es sich dabei insbesondere um Aniontenside, Silikate und (Co-)Polymerisate handeln. Das zusätzliche Zumischgranulat kann dabei entsprechend einem dem Fachmann aus dem Stand der Technik geläufigen Verfahren hergestellt werden.

Die Kombination beider Granulate führt abhängig von der Verfahrensvariante bei der Herstellung des Granulates zu teilchenförmigen Wasch- und/oder Reinigungsmitteln, die bei an sich gleicher Stoffzusammensetzung in Bezug auf das gesamte teilchenförmige Wasch- und/oder Reinigungsmittel dennoch unterschiedliche Eigenschaften haben, beispielsweise was die Löslichkeit dieser Mittel betrifft. Diese Eigenschaften werden vorteilhafterweise im wesentlichen durch die Eigenschaften der im Wasch- und/oder Reinigungsmittel enthaltenen Granulate beeinflusst.

Gemäß einer bevorzugten Ausführungsform enthalten die Wasch- und/oder Reinigungsmittel neben den Granulaten weitere teilchenförmige Wasch- und/oder Reinigungsmittelbestandteile, insbesondere Aniontensid-haltige und/oder Wasserglas/(Co-)Polymerhaltige Zumischgranulate, bei welchen es sich insbesondere um Sprühtrocknungsprodukte handelt, wobei es sich bei dem Polymeren beispielsweise um Polyacrylsäure und deren Natriumsalze bzw. Polyacrylate handelt bzw. bei den Copolymeren beispielsweise um solche der Acrylsäure mit Maleinsäure.

Nach einer anderen bevorzugten Ausführungsform handelt es sich bei dem ZumischGranulat um weiter(e), entsprechend einem erfindungsgemäßen Verfahren hergestellten Granulat(e), wobei vorzugsweise als Flüssigkomponenten bei der Herstellung dieses Zumischgranulates nur wässerige Lösungen von Komponenten aus Wasch - und Reinigungsmitteln zum Einsatz kommen, wobei insbesondere Silikat- und/oder (Co-)Polymerlösungen besonders bevorzugt sind.

Wie gefunden wurde, verschlechtert sich die Löslichkeit der Granulate vorzugsweise dann, wenn bei der Granulation mit steigenden Flüssigkeitsanteilen gearbeitet wird, insbesondere wenn als Granulationsflüssigkeit anionische Tenside eingesetzt werden bzw. insbesondere wenn die Granulationsflüssigkeit anionische Tenside oder deren Vorstufen enthält.

Zur Herstellung von Wasch- und/oder Reinigungsmitteln werden neben den üblichen dem Fachmann bekannten Aufbereitungskomponenten ein Granulat sowie ein weiteres Zumischgranulat, welches die gewünschten restliche Komponenten enthält und vorzugsweise durch Sprühtrocknung hergestellt wird, vermischt. Dabei ist es vorteilhaft wenn das enthaltene Aniontensid auf das erste Granulat und auf das zweite Granulat aufgeteilt sind, so daß vorzugsweise nicht mehr als 70 Gew-% der im gesamten Wasch- und/oder Reinigungsmittel enthaltenen Aniontenside über das erste Granulat und vorzugsweise nicht weniger als 30 Gew.-% über das zweite Granulat eingebracht werden. Das zweite Granulat enthält dabei vorzugsweise Silikat und (Co-)polymerisatanteile.

Das Granulat hat dann vorzugsweise eine Partikelgröße d₅₀ von 0,3 bis 0,4 mm. Das resultierende teilchenförmige Wasch- und/oder Reinigungsmittel hat dann vorzugsweise eine Partikelgröße d₅₀ von 0,4 bis 0,6 mm. Sehr gut lösliche Wasch- und/oder Reinigungsmittel sind beispielsweise in 30°C warmem Wasser in 90 Sekunden mit Rückständen von vorzugsweise 1-1,5 Gew.-% nahezu vollständig aufgelöst. Die eingesetzten Granulate sind dabei insbesondere vollständig aufgelöst.

Zur Herstellung von Wasch- und/oder Reinigungsmitteln, die gut löslich sind, werden neben den üblichen Aufbereitungskomponenten mindestens ein Granulat sowie ein weiteres Zumischgranulat eingesetzt, welches weitere Komponenten enthält und vorzugsweise durch Sprühtrocknung hergestellt ist. Im Gegensatz zu dem zuvor beschriebenen Produkt sind die auf das fertige Wasch- und/oder Reinigungsmittel bezogenen Anteile an Aniontensiden vollständig im Granulat enthalten. Die Gesamtanteile an Silikat und (Co-)Polymerisat sind vorzugsweise vollständig in dem Zumischgranulat enthalten. Sowohl das Granulat wie auch das resultierende fertige Wasch- und/oder Reinigungsmittel haben eine Partikelgröße d₅₀ von vorzugsweise 0,8 bis 1,0 mm. Gut lösliche Wasch- und/oder Reinigungsmittel sind in 30°C warmem Wasser in 90 Sekunden mit Rückständen von vorzugsweise 1,5 bis 2,0 Gew.-% gelöst. Die eingesetzten Granulate sind vorzugsweise mit Rückständen von 1 Gew.-% gelöst.

Zur Herstellung von Wasch- und/oder Reinigungsmitteln, die noch gut löslich, aber gröber sind, werden neben den üblichen Aufbereitungskomponenten mindestens ein Granulat sowie ein weiteres Zumischgranulat eingesetzt, welches weitere Komponenten enthält und vorzugsweise durch Sprühtrocknung hergestellt ist. Die Zugabe der Flüssigkomponente ist auf Mischer/Granulator und Wirbelschicht aufgeteilt, vorzugsweise in der Weise, daß die Flüssigkomponente im Verhältnis von cirka 3:1 auf Mischer/Granulator und Wirbelschicht verteilt ist. Dabei werden vorzugsweise alle Aniontensidbestandteile die im gesamten Wasch- und/oder Reinigungsmittel enthalten sind, über das Granulat in das Wasch- und/oder Reinigungsmittel eingebracht. Die Silikat und (Co-)Polymerisatanteile sind vorzugsweise vollständig im Zumischgranulat enthalten.

Das Granulat und das Wasch- und/oder Reinigungsmittel haben in diesem Fall eine Partikelgröße d₅₀ von vorzugsweise 1,3 bis 1,6 mm. Diese gut lösliche, groben Wasch- und/oder Reinigungsmittel sind in 30°C warmem Wasser in 90 Sekunden mit Rückständen von vorzugsweise 2,5 bis 3,0 Gew.-% gelöst. Die eingesetzten Granulate sind vorzugsweise mit Rückständen von ca. 2 Gew.-% gelöst.

Granulate mit verzögerter Löslichkeit sind Granulate, die zunächst kaum in Lösung gehen, aber dann, vorzugsweise nach Auflösung einer äußeren Hülle zügig und schnell wie die zuvor beschriebenen Granulate in Lösung gehen. Im bevorzugten Fall besteht die Hüllschicht aus Silikaten und / oder (Co-)Polymeren. Das Granulat enthält im Kern vorzugsweise die Aniontenside. Derartige Granulate sind für den Einsatz in einer Waschmitteltablette sehr vorteilhaft und führen überraschenderweise zu einem schnellen Tablettenzerfall und guter Löslichkeit der Tablette.

Vorzugsweise können Granulate mit verzögerter Löslichkeit durch Aufdüsung der gesamten anionischen Tensidanteile im Mischer/Granulator und Aufdüsung von wässerigen Silikat - und (Co-)Polymerisatlösung in der Wirbelschicht erhalten werden. Weitere Anteile an (Co-)Polymerisat und Silikat werden vorzugsweise über ein weiteres Zumischgranulat, vorzugsweise durch Sprühtrocknung erhältlich, dem Wasch- und Reinigungsmittel zugemischt. Bei der Herstellung dieses Zumischgranulates ist es beispielsweise auch vorteilhaft, wenn vorzugsweise ca. 66% der wässerigen Flüssigkeiten auf z.B. Soda und Sulfat im Mischer/Granulator und vorzugsweise die restlichen ca. 34 % in der Wirbelschicht aufgedüst werden. Das verzögert lösliche Granulat hat eine mittlere Korngröße d₅₀ von vorzugsweise 1,3 bis 1,5 mm, die Löslichkeit in 30°C warmen Wasser ist vorzugsweise so verzögert, das nach 5 Minuten noch Rückstände von vorzugsweise 5 bis 6 Gew.-% festzustellen sind. Das zweite Zumischgranulat hat eine mittlere Korngröße d₅₀ von vorzugsweise 1,0 mm und ist vorzugsweise nach 90 Sekunden rückstandsfrei aufgelöst.

Diese Granulate mit verzögerter Löslichkeit sind insbesondere für Waschmitteltabletten von großem Interesse.

Die Feinteiligkeit und die Löslichkeit des Granulates sind vorzugsweise insgesamt abhängig von den Gesamtanteilen aufgebrachter Flüssigkeit im Granulat. Grobe Granulate, bei denen ein hoher Flüssigkeitsanteil zur Granulation verwendet wurde, sind im allgemeinen schlechter löslich als feinteilige Granulate, bei denen weniger Flüssigkeitsanteile zur Granulation eingesetzt wurden. Da die zur Granulation eingesetzten Flüssigkeitsanteile vorzugsweise Wirksubstanzen der Wasch - und Reinigungsmittel sind, ist es zweckmäßig bei Einsatz geringerer Flüssigkeitsanteile für die Granulate, daß die fehlenden Wirksubstanzen im aufbereiteten Wasch- und/oder Reinigungsmittel, welches die Granulate enthält, durch eine zusätzliche, die fehlenden Anteile an Wirksubstanz enthaltende, Komponente ergänzt werden. Dies ist vorzugsweise das zuvor genannte zweite Granulat bzw. Zumischgranulat, welches insbesondere ein Sprühtrocknungsprodukt ist.

Es wurde überraschend gefunden, daß vorzugsweise feinteilige Wasch- und/oder Reinigungsmittel-Abmischungen, die neben einem feinteiligen Granulat, bei dessen Granulation nur ein Teil der gesamten, in das Wasch- und/oder Reinigungsmittel einzubringenden Flüssigkomponenten, insbesondere Aniontensidkomponenten, verwendet wurde, und welche noch zusätzlich ein mit den restlichen Flüssigkeiten hergestelltes Zumischgranulat enthalten, deutlich besser löslich sind als Wasch- und/oder Reinigungsmittelabmischungen, die Granulate enthalten, bei deren Granulation höhere Flüssigkeitsanteile, vorzugsweise die gesamten, in das Wasch- und/oder Reinigungsmittel einzubringenden Flüssigkomponenten, insbesondere Aniontensidkomponenten, verwendet wurden.

Die zweite Zumischgranulatkomponente kann nach einem üblichen Granulationsverfahren oder auch einem erfindungsgemäßen Verfahren hergestellt werden, vorzugsweise aber durch Sprühtrocknung.

Vorzugsweise sind die Granulate in den Tabletten zumindest zu 20 Gew.-%, vorteilhafterweise zumindest zu 30 Gew.-%, in weiter vorteilhafter Weise zumindest zu 40 Gew.-%, noch vorteilhafter zumindest zu 50 Gew.-%, insbesondere zumindest zu 60 Gew.-% enthalten, bezogen auf das Gesamtgewicht der Tablette.

Überraschenderweise wurde gefunden, daß gerade jenes Granulat, bei dessen Herstellung die in der Wirbelschicht zu versprühenden Komponenten keine Aniontensidsäure enthalten, insbesondere tensidfrei sind und zumindest anteilsweise filmbildende Bestandteile aufweisen, welches sich verzögert löst, einen sehr guten Tablettenzerfall möglich macht, wenn die Tablette neben diesem Granulat ein typisches Sprengmittel enthält. Dieser paradox erscheinende Sachverhalt wird, ohne sich an diese oder eine andere Theorie zu binden, dadurch erklärt, daß davon auszugehen ist, daß bei Einsatz des verzögert löslichen Granulates eine Anlösung der Einzelpartikel unter Gelbildung der Tenside mit Wasser verzögert erfolgt und deshalb zunächst das Sprengmittel den Zerfall der Tablette in die einzelnen Granulate bewirkt. Danach können sich die Granulate auflösen. Dabei zerfällt die Tablette innerhalb weniger Sekunden.

Tabletten, welche die im Vergleich schneller löslichen Granulate beinhalten, zerfallen dagegen nicht bereits nach wenigen Sekunden, sondern erst im Minutenbereich bzw. überhaupt nicht.

Nach einer bevorzugten Ausführungsform der Erfindung enthält die Tablette mindestens ein quellfähiges Desintegrationshilfsmittel. Gleichermaßen bevorzugt sind alle üblichen Sprengmittel.

Eine Tablette, die ein quellfähiges Desintegrationshilfsmittel auf Cellulosebasis, vorzugsweise in granularer, cogranulierter oder kompaktierter Form, in Mengen von 0,5 bis 10 Gew.-%, vorzugsweise von 1 bis 8 Gew.-% und insbesondere von 2 bis 7 Gew.-%, jeweils bezogen auf das Formkörpergewicht, enthält, ist eine bevorzugte Ausführungsform der Erfindung.

Wenn die Tablette zumindest anteilsweise von einer wasserlöslichen Umhüllung umgeben ist, wobei diese ein oder mehrere Materialien aus der Gruppe (gegebenenfalls acetalisierter) Polyvinylalkohol (PVAL) und/oder PVAL-Copolymere, Polyvinylpyrrolidon, Polyethylenoxid, Polyethylenglykol, Gelatine, Cellulose und deren Derivate, insbesondere MC, HEC, HPC, HPMC und/oder CMC, und/oder Copolymere sowie deren Mischungen, umfaßt, so liegt eine bevorzugte Ausführungsform der Erfindung vor.

Ein weiterer Gegenstand der Erfindung liegt in der Verwendung der zuvor beschriebenen Tabletten in Haushaltswaschmaschinen oder- Geschirrspülmaschinen und ebenso in der Verwendung als einspülkammerdosierbare Waschmitteltabletten für Haushaltswaschmaschinen.

### Beispiele

Nachfolgend werden vier Beispiele beschrieben, die zu vier teilchenförmigen Universalwaschmitteln mit im wesentlichen gleicher Zusammensetzung (in Gew.-%) in Bezug auf die Gesamtzusammensetzung führten, in welche aber unterschiedliche Granulate eingearbeitet wurden. Die unterschiedlichen Granulate führten dabei zu unterschiedlichen Eigenschaften der Universalwaschmittel.

Zusammensetzung des Universalwaschmittels (im folgenden auch UWM genannt):

| A. Granulare Komponenten : | | 70 Gew.-% |
|---|---|---|
| | Bestehend aus: | |
| | Tenside | 11 - 16 Gew.-% |
| | Phosphonat | 0,5 - 1 Gew.-% |
| | Soda und Na - hydrogencarbonat | 17 - 22 Gew.-% |
| | Silikat | 2 - 5 Gew.-% |
| | Natriumpolyacrylat | 2 - 4 Gew.-% |
| | Na - sulfat / Wasser / Salze | Rest auf 70 Gew.-% |

| B. Übliche Aufbereitungskomponenten | | 30 Gew.-% |
|---|---|---|
| | Vergrauungsinhibitor | 0,5 - 1 Gew.-% |
| | Schauminhibitor | 2 - 4 Gew.-% |
| | Optischer Aufheller | 0,1 - 0,3 Gew.-% |
| | Enzyme | 0,5 - 1 Gew.-% |
| | Bleiche / Bleichaktivator | 15 - 20 Gew.-% |
| | Duftstoff | 0,1 - 0,5 Gew.-% |
| | Tenside | 0 - 2 Gew.-% |
| | Soda / Na-hydrogencarbonat /Na-Sulfat | Rest auf 30 Gew.-% |

### Beispiel 1 (nicht erfindungsgemäß):

### Herstellung von Granulat A:

In einem kontinuierlich betriebenen Freifallmischer (Trommel mit Abschlagleiste) wurde auf 35,5 Gew.-% Natriumsulfat und 46,3 Gew.-% Soda 18,5 Gew.-% eines Säuregemisches, welches sich wiederum aus 75,3 Gew.-% Alkylbenzolsulfonsäure, 11,2 Gew.-% Fettsäure , 10,5 Gew.-% Turpinal®SL-Lösung (60%ig wässrig) und 3 Gew.-% Wasser zusammensetzte, aufgedüst.

### (Turpinal®SL ist Hydroxyethan-1,1-diphosphonsäure; ex Solutia Inc.)

Die Nachbehandlung des Gemisches erfolgte in einer kontinuierlichen Wirbelschicht mit 40°C warmer Luft bei einer Verweilzeit von 10 Minuten.

Das Produkt wurde mit einem 1,25 mm Sieb abgesiebt. Der Überschlaganteil von 20 Gew.-% wurde nach Vermahlung wieder dem Mischer/Granulator zugeführt. Feinanteile wurden nicht separiert.

Die Zusammensetzung des Granulates A nach der Neutralisation war wie folgt:

| Anteile Granulat A: | 100,00 Gew.-% |
|---|---|
| LAS | 14,27 Gew.-% |
| Seife | 2,22 Gew.-% |
| Na₄HEDP | 1,64 Gew.-% |
| Natriumhydrogencarbonat | 3,42 Gew.-% |
| Natriumsulfat | 35,78 Gew.-% |
| Natriumcarbonat | 40,59 Gew.-% |
| Wasser / Salze | 2,08 Gew.-% |

(LAS=Alkylbenzolsulfonat; Na₄HEDP=Hydroxyethylen- Diphosphonsäure-Tetra-natrium Salz)

Ergänzend zum Granulat A enthielt das zum Universalwaschmittel abgemischte Fertigprodukt sprühgetrocknetes Zumischgranulat Z der folgenden Zusammensetzung:

| Anteile Zumischgranulat Z: | 100.00 Gew.-% |
|---|---|
| LAS | 20,00 Gew.-% |
| Silikat | 13,20 Gew.-% |
| Sokalan PA 30 | 12,00 Gew.-% |
| Natriumsulfat | 50,00 Gew.-% |
| Wasser | 4,80 Gew.-% |

(Sokalan PA 30= Natriumpolyacrylat 45 Gew.-% in H₂O ex BASF)

Die Aufmischung der Granulate zu einem Universalwaschmittel I (im Verlauf auch UWM I genannt) im unten angegebenen Verhältnis führte zu folgenden Eigenschaften des Universalwaschmittels:

UWM I bestand aus:

| | |
|---|---|
| Granulat A | 47 Gew.-% |
| Zumischgranulat Z | 23 Gew.-% |
| Übliche Aufbereitungskomponenten | 30 Gew.-% |

Eigenschaften Beispiel 1:

| | Granulat A | Universalwaschmittel I |
|---|---|---|
| Schüttgewicht | 645 g/l | 524 g/l |
| | | |

| Kornzusammensetzung (Siebanalyse) | | |
|---|---|---|
| < 0,1 mm | 2 Gew.-% | 1 Gew.-% |
| 0,10-0,20 mm | 15 Gew.-% | 11 Gew.-% |
| 0,20-0,40 mm | 37 Gew.-% | 31 Gew.-% |
| 0,40-0,63 mm | 23 Gew.-% | 28 Gew.-% |
| 0,63-0,80 mm | 9 Gew.-% | 16 Gew.-% |
| 0,80-1,25 mm | 14 Gew.-% | 13 Gew.-% |
| | | |

| Löslichkeit * | | |
|---|---|---|
| L -Test 90sec. | 0,1 Gew.-% | 1,5 Gew.-% |
| L - Test 300 sec. | 0 Gew.-% | 0,9 Gew.-% |
| L-Test90 sec. ergab für das Zumischgranulat Z einen Wert von 0 Gew.-%. | | |

| | | |
|---|---|---|
| * Das Rückstandsverhalten bzw. das Löslichkeitsverhalten des Granulates A, des Zumischgranulates und des Universalwaschmittels I wurde mit dem L-Test und dem L300-Test bestimmt. | | |

### L-Test:

Zur Bestimmung des Rückstandsverhaltens bzw. des Löslichkeitsverhaltens wurden in einem 2 I-Becherglas 8 g des zu testenden Mittels unter Rühren (800 U/min mit Laborrührer/Propeller- Rührkopf 1,5 cm vom Becherglasboden entfernt zentriert) eingestreut und 90 Sekunden bei 30°C gerührt. Der Versuch wurde mit Wasser einer Härte von 16°d durchgeführt. Anschließend wurde die Waschlauge durch ein Sieb (80 µm) abgegossen. Das Becherglas wurde mit sehr wenig kaltem Wasser über dem Sieb ausgespült. Es erfolgte eine 2fach-Bestimmung. Die Siebe wurden im Trockenschrank bei 40°C ± 2°C bis zur Gewichtskonstanz getrocknet und der Waschmittelrückstand ausgewogen. Der Rückstand wird als Mittelwert aus den beiden Einzelbestimmungen in Gew.-% angegeben. Bei Abweichungen der Einzelergebnisse um mehr als 20% voneinander werden üblicherweise weitere Versuche durchgeführt; dies war bei den vorliegenden Untersuchungen aber nicht erforderlich.

L300-Test: Dieser Test entspricht dem L-Test bis auf den Unterschied, daß hier nicht 90, sondern 300 Sekunden bei 30°C gerührt wird.

### Beispiel 2 (nicht erfindungsgemäß):

### Herstellung von Granulat B:

In einem kontinuierlich betriebenen Freifallmischer (Trommel mit Abschlagleiste) wurde auf 42,8 Gew.-% Natriumsulfat und 33,5 Gew.-% Soda 24,53 Gew.-% eines Säuregemisches, welches sich wiederum aus 82,4 Gew.-% Alkylbenzolsulfonsäure, 6,9 Gew.-% Fettsäure , 6,7 Gew.-% Turpinal SL-Lösung (60%ig) und 4 Gew.-% Wasser zusammensetzte, aufgedüst.

Die Nachbehandlung des Gemisches erfolgte in einer kontinuierlichen Wirbelschicht mit 40°C warmer Luft bei einer Verweilzeit von 10 Minuten.

Das Produkt wurde mit einem 2,0 mm Sieb abgesiebt. Der Überschlaganteil von ca. 15 % wurde nach Vermahlung wieder dem Sieb zugeführt. Feinanteile wurden nicht separiert. Die Zusammensetzung des Granulates B nach der Neutralisation war wie folgt:

| Anteile Granulat B | 100.00 Gew.-% |
|---|---|
| LAS | 21 Gew.-% |
| Seife | 1,84 Gew.-% |
| Na₄HEDP | 1,36 Gew.-% |
| Natriumsulfat | 42,84 Gew.-% |
| Natriumhydrogencarbonat | 4,15 Gew.-% |
| Natriumcarbonat | 26,14 Gew.-% |
| Wasser / Salze | 2,67 Gew.-% |

Ergänzend zum Granulat B enthielt das zum Universalwaschmittel abgemischte Fertigprodukt sprühgetrocknetes Zumischgranulat ZZ folgender Zusammensetzung:

| Anteile Zumischgranulat ZZ | 100,00 Gew.-% |
|---|---|
| Natriumsulfat | 17,47 Gew.-% |
| Natriumcarbonat | 27,07 Gew.-% |
| Sokalan PA 30 | 20,00 Gew.-% |
| Silikat | 22,00 Gew.-% |
| Wasser | 13,46 Gew.-% |

Erfolgte eine Aufmischung der Granulate zu einem Universalwaschmittel II (im folgenden auch UWM II genannt) im unten angegebenen Verhältnis, so wurden für das UWM II die nachfolgend beschriebenen Eigenschaften erhalten:

### UWM II bestand aus:

| | |
|---|---|
| Granulat B | 53,8 Gew.-% |
| Zumischgranulat ZZ | 16,2 Gew.-% |
| Übliche Aufbereitungskomponenten | 30 Gew.-% |

### Eigenschaften Beispiel 2

| | Granulat B | Universalwaschmittel II |
|---|---|---|
| Schüttgewicht | 615 g/l | 560 g/l |
| | | |

| Kornzusammensetzung (Siebanalyse) | | |
|---|---|---|
| <0,1 mm | 0,4 Gew.-% | 1,5 Gew.-% |
| 0,1-0,2 mm | 1,3 Gew.-% | 3,4 Gew.-% |
| 0,2-0,4 mm | 5,2 Gew.-% | 8,5 Gew.-% |
| 0,4-0,8 mm | 17,4 Gew.-% | 34,8 Gew.-% |
| 0,8-1,25 mm | 25,2 Gew.-% | 22,3 Gew.-% |
| 1,25-1,60 mm | 35,2 Gew.-% | 21,4 Gew.-% |
| 1,60-2,00 mm | 15,3 Gew.-% | 8,1 Gew.-% |

| Löslichkeit * | | |
|---|---|---|
| L -Test 90sec. | 1,2 Gew.-% | 2,2 Gew.-% |
| L - Test 300 sec. | 0,5 Gew.-% | 1,5 Gew.-% |
| L-Test90 sec. ergab für das Zumischgranulat ZZ einen Wert von 0 Gew.-%. | | |

| | | |
|---|---|---|
| * Methode zur Bestimmung der Löslichkeit vergleiche Beispiel 1 | | |

### Beispiel 3 (nicht erfindungsgemäß):

### Herstellung von Granulat C:

In einem kontinuierlich betriebenen Freifallmischer (Trommel mit Abschlagleiste) wurde auf 44,2 Gew.-% Natriumsulfat und 32,7 Gew.-% Soda 18,0 Gew.-% eines Säuregemisches, welches sich wiederum aus 82,4 Gew.-% Alkylbenzolsulfonsäure, 6,9 Gew.-% Fettsäure , 6,7 Gew.-% Turpinal SL-Lösung (60%ig) und 4 Gew.-% Wasser zusammensetzte, aufgedüst.

Weitere 6 Gew.-% des gleichen Säuregemisches werden zusätzlich in der nachfolgenden, mit ca. 40°C betriebenen Wirbelschicht aufgedüst. Die Verweilzeit in der Wirbelschicht betrug ca. 10 Minuten. Die Absiebung des Produktes erfolgte zwischen 2,0 mm und 0,8 mm Sieben.

Der Überschlaganteil von 15 % wurde nach der Vermahlung ebenfalls wie die ca. 25 % Feinanteile, welche kleiner als 0,8 mm sind, dem Mischer/Granulator wieder zugeführt.

Die Zusammensetzung des Granulat C nach der Neutralisation war wie folgt:

| Anteile Granulat C | 100,00 Gew.-% |
|---|---|
| LAS | 20,49 Gew.-% |
| Seife | 1,79 Gew.-% |
| Na₄HEDP | 1,33 Gew.-% |
| Natriumsulfat | 44,22 Gew.-% |
| Natriumhydrogencarbonat | 4,05 Gew.-% |
| Natriumcarbonat | 25,51 Gew.-% |
| Wasser / Salze | 1,93 Gew.-% |

Ergänzend zum Granulat C enthielt das zum Universalwaschmittel abgemischte Fertigprodukt ein sprühgetrocknetes Zumischgranulat ZZ folgender Zusammensetzung:

| Anteile Zumischgranulat ZZ | 100,00 Gew.-% |
|---|---|
| Natriumsulfat | 17,47 Gew.-% |
| Natriumcarbonat | 27,07 Gew.-% |
| Sokalan PA 30 | 20,00 Gew.-% |
| Silikat | 22,00 Gew.-% |
| Wasser | 13,46 Gew.-% |

Erfolgte eine Aufmischung der Granulate zu einem Universalwaschmittel III (im folgenden auch UWM III genannt) im unten angegebenen Verhältnis, so wurden die nachfolgend beschriebenen Eigenschaften erhalten:

UWM III bestand aus:

| | |
|---|---|
| Granulat C | 55 Gew.-% |
| Zumischgranulat ZZ | 15 Gew.-% |
| Rest entsprechend der aufgeführten Rezeptur | 30 Gew.-% |

### Eigenschaften Beispiel 3:

| | Granulat C | Universalwaschmittel III |
|---|---|---|
| Schüttgewicht | 595 g/l | 524 g/l |
| | | |

| Kornzusammensetzung (Siebanalyse) | | |
|---|---|---|
| <0,1 mm | 0 Gew.-% | 1 Gew.-% |
| 0,1 - 0,2 mm | 0 Gew.-% | 2 Gew.-% |
| 0,2 - 0,4 mm | 0 Gew.-% | 4 Gew.-% |
| 0,4 - 0,8 mm | 5 Gew.-% | 7 Gew.-% |
| 0,8-1,25 mm | 15 Gew.-% | 18 Gew.-% |
| 1,25-1,60 mm | 47 Gew.-% | 42 Gew.-% |
| 1,60-2,00 mm | 33 Gew.-% | 26 Gew.-% |
| | | |

| Löslichkeit * | | |
|---|---|---|
| L -Test 90sec. | 2,0 Gew.-% | 2, 8 Gew.-% |
| L - Test 300 sec. | 0,5 Gew.-% | 1,5 Gew.-% |
| L-Test90 sec. ergab für das Zumischgranulat ZZ einen Wert von 0 Gew.-%. | | |

| | | |
|---|---|---|
| * Methode zur Bestimmung der Löslichkeit vergleiche Beispiel 1 | | |

### Beispiel 4 (erfindungsgemäß):

### Herstellung von Granulat D:

In einem kontinuierlich betriebenen Freifallmischer (Trommel mit Abschlagleiste) wurde auf 36,39 Gew.-% Natriumsulfat und 31,11 Gew.-% Soda 22,77 Gew.-% eines Säuregemisches, welches sich wiederum aus 82,6 Gew.-% Alkylbenzolsulfonsäure, 6,94 Gew.-% Fettsäure , 6,74 Gew.-% Turpinal SL-Lösung (60%ig) und 4 Gew.-% Wasser zusammensetzte, aufgedüst.

In der dem Mischer/Granulator nachgeschalteten Wirbelschicht werden 17,18 Gew.-% eines Flüssigkeitsgemisches bestehend aus 44,7 Gew.-% einer 45 Gew.-%igen Sokalan PA 30-Lösung und 55,3 Gew.-% einer 40%igen Wasserglaslösung (Modul 2,0) auf das fluidisierte Granulat aufgedüst.

In der Wirbelschicht erfolgt mit 110°C heißer Luft die Produkttrocknung auf ca. 5-6 Gew.-% Restwasser.

Die Absiebung des Produktes erfolgte zwischen 2,0 mm und 0,8 mm Sieben.

Der Überschlaganteil von 15 Gew.-% wurde nach der Vermahlung ebenfalls wie die ca. 25 Gew.-% Feinanteile, welche kleiner als 0,8 mm sind, dem Mischer/Granulator wieder zugeführt.

Die Zusammensetzung des Granulates D nach der Neutralisation war wie folgt:

| Anteile Granulat D | 100.00 Gew.-% |
|---|---|
| LAS | 19,45 Gew.-% |
| Seife | 1,70 Gew.-% |
| Na₄HEDP | 1,26 Gew.-% |
| Natriumsulfat | 36,31 Gew.-% |
| Natriumhydrogencarbonat | 3,84 Gew.-% |
| Natriumcarbonat | 24,20 Gew.-% |
| Sokalan PA 30 | 3,45 Gew.-% |
| Silikat | 3,79 Gew.-% |
| Wasser / Salze | 5,36 Gew.-% |

Zusätzlich zu dem Granulat D enthielt neben den üblichen Aufbereitungskomponenten das Universalwaschmittel gemäß diesem Beispiel ein weiteres Zumischgranulat E.

Die Zusammensetzung des Zumischgranulats E war wie folgt:

| Anteile Zumischgranulat E | 100,00 Gew.-% |
|---|---|
| Natriumsulfat | 35,54 Gew.-% |
| Natriumcarbonat | 33,87 Gew.-% |
| Sokalan PA 30 | 8,11 Gew.-% |
| Silikat | 8,92 Gew.-% |
| Wasser | 13,56 Gew.-% |

Erfolgte eine Aufmischung der Granulate zu einem Universalwaschmittel IV (im folgenden auch UWM IV genannt) im unten angegebenen Verhältnis, so wurden für das UWM IV die infolge beschriebenen Eigenschaften erhalten:

### UWM IV bestand aus:

| | |
|---|---|
| Granulat D | 58 Gew.-% |
| Zumischgranulat E | 12 Gew.-% |
| Rest entsprechend der aufgeführten Rezeptur | 30 Gew.-% |

### Eigenschaften Beispiel 4:

| | Granulat D | Zumisch-Granulat E | Universalwaschmittel IV |
|---|---|---|---|
| Schüttgewicht | 675 g/l | 560 g/l | 665 g/l |
| | | | |

| Kornzusammensetzung (Siebanalyse) | | | |
|---|---|---|---|
| <0,1 mm | 0 Gew.-% | 0 Gew.-% | 1,0 Gew.-% |
| 0,1-0,2 mm | 0 Gew.-% | 0 Gew.-% | 2,0 Gew.-% |
| 0,2-0,4 mm | 0 Gew.-% | 0 Gew.-% | 4,0 Gew.-% |
| 0,4-0,8 mm | 5,0 Gew.-% | 6,0 Gew.-% | 7,0 Gew.-% |
| 0,8-1,25 mm | 25,0 Gew.-% | 48,0 Gew.-% | 25,0 Gew.-% |
| 1,25-1,6 % | 52,0 Gew.-% | 35,0 Gew.-% | 47,0 Gew.-% |
| 1,6-2,0 mm | 18,0 Gew.-% | 11,0 Gew.-% | 14,0 Gew.-% |
| Löslichkeit * | | | |
| L -Test 90sec. | 7,3 Gew.-% | 0 Gew.-% | 4,9 Gew.-% |
| L - Test 300 sec. | 0,2 Gew.-% | 0 Gew.-% | 1,5 Gew.-% |

| | | | |
|---|---|---|---|
| * Methode zur Bestimmung der Löslichkeit vergleiche Beispiel 1 | | | |

### Schlussfolgerung aus den Beispielen 1 - 4:

Die in den Beispielen aufgeführten Universalwaschmittel enthielten neben den üblichen Aufbereitungskomponenten die beschriebenen Granulate und jeweils ein zusätzliches Zumischgranulat in welchem weitere flüssige Wirksubstanzen eingearbeitet waren. Die Herstellungsvariante des Granulates in Mischer/Granulator und Wirbelschicht und die Aufteilung der eingebrachten Flüssigkeiten A und B in dem entsprechend dem beanspruchten Verfahren hergestellten Granulat sowie in einem zusätzlichen Zumischgranulat beeinflussten die Eigenschaften des Universalwaschmittels.

Bei der Flüssigkomponente A handelte es sich um LAS-H (Alkylbenzolsulfonsäure), die während der Granulation zu LAS-Na (Alkylbenzolsulfonat Na-Salz) reagierte.

Bei der Flüssigkeitskomponente B handelte es sich um ein Gemisch aus 40 Gew-% iger Wasserglaslösung (Modul 2,0) und 45 Gew-% iger Sokalan PA 30 Lösung.

Die Verfahrensvarianten im Vergleich:

Angaben als Wirkstoffanteile im Universalwaschmittel über Granulat und Zumischgranulat.

| | 1. Granulat ** | | | | Zumischgranulat | | UWM | |
|---|---|---|---|---|---|---|---|---|
| | Mischer/Granulator Flüssigkomponente | | Wirbelschicht Flüssigkomponente | | Flüssigkomponente | | Flüssigkomponente | |
| | LAS- Na Gew.-% | B Gew.-% | LAS- Na Gew.-% | B Gew.-% | LAS- Na Gew.-% | B Gew.-% | LAS- Na Gew.-% | B Gew.-% |
| UWM I | 6,7 | 0 | 0 | 0 | 4,6 | 6,3 | 11,3 | 5,8 |
| UWM II | 11,3 | 0 | 0 | 0 | 0 | 6,8 | 11,3 | 6,8 |
| UWM III | 7,5 | 0 | 3,8 | 0 | 0 | 6,3 | 11,3 | 6,3 |
| UWM IV | 11,3 | 0 | 0 | 4,2 | 0 | 2,04 | 11,43 | 6,24 |

| | | | | | | | | |
|---|---|---|---|---|---|---|---|---|
| ** 1. Granulat bedeutet bezogen auf die Universalwaschmittel: UWM I enthält Granulat A, UWM II enthält Granulat B, UWM III enthält Granulat C, UWM IV enthält Granulat D | | | | | | | | |

Die Produkteigenschaften im Vergleich

| | Schüttgewicht Granulat | Schüttgewicht UWM | L-Test Granulat | L-Test UWM | L300-Test Granulat | L300-Test UWM |
|---|---|---|---|---|---|---|
| | [g/L] | [g/L] | [Gew.-%] | [Gew.-%] | [Gew.-%] | [Gew.-%] |
| UWMI-GranulatA | 645 | 524 | 0,1 | 1,5 | 0 | 0,9 |
| UWM II Granulat B | 615 | 560 | 1,2 | 2,2 | 0,5 | 1,5 |
| UWM III Granulat C | 595 | 524 | 2,0 | 2,8 | 0,5 | 1,5 |
| UWM IV Granulat D | 675 | 665 | 7,3 | 4,9 | 0,2 | 1,5 |
| Zumischgranulat E | 560 | 665 | 0 | | 0 | |
| in UWM IV | | | | | | |

### Folgerunge:

- Die ergänzenden Zumischgranulate hatten einen L - Test von 0. Somit hatten andere Zumischkomponenten und insbesondere das nach dem beanspruchten Verfahren hergestellte 1. Granulat direkten Einfluss auf das Löseverhalten des daraus hergestellten Universalwaschmittels.
- Die Löslichkeit der Universalwaschmittel ist direkt mit der Löslichkeit der beinhalteten Granulate korrelierbar. So wurden sehr gut lösliche Universalwaschmittel dann erhalten, wenn die eingesetzten, entsprechend dem beanspruchten Verfahren hergestellten 1. Granulate sehr gut löslich sind.
- Für die Löslichkeit des nach dem beanspruchten Verfahren hergestellten Granulates ergaben sich die folgende Abstufung:
   ○ Sehr gut lösliche feine Granulate wurden dann erhalten, wenn die Flüssigkomponente A nur teilweise bei der Granulation und hierbei nur im Mischer/Granulator zum Einsatz kam, und wobei in der Wirbelschicht keine Flüssigkomponente zum Einsatz kam. Im UWM enthaltenen, ergänzenden Zumischgranulat kamen bei der Herstellung die kompletten Anteile der Flüssigkomponente B und die Restanteile der Flüssigkomponente A zum Einsatz (vgl. UWM I / Granulat A).
   ○ Gut lösliche etwas gröbere Granulate wurden dann erhalten, wenn die Flüssigkomponente A komplett bei der Granulation und hierbei nur im Mischer/Granulator zum Einsatz kam, und wobei in der Wirbelschicht keine Flüssigkomponente zum Einsatz kaum. Im UWM enthaltendem, ergänzendem Zumischgranulat kamen bei der Herstellung die kompletten Anteile der Flüssigkomponente B zum Einsatz und keine Anteile der Flüssigkomponente A (vgl. UWM II / Granulat B).
   ○ Akzeptabel lösliche gröbere Granulate wurden dann erhalten, wenn die Flüssigkomponente A komplett bei der Granulation und hierbei sowohl im Mischer/Granulator als auch in der Wirbelschicht zum Einsatz kam. Die Flüssigkomponente wurde also auf Mischer/Granulator und Wirbelschicht aufgeteilt. Im UWM enthaltenem, ergänzendem Zumischgranulat kamen bei der Herstellung die kompletten Anteile der Flüssigkomponente B zum Einsatz und keine Anteile der Flüssigkomponente A (vgl. UWM III / Granulat C).
   ○ Grobe Granulate mit verzögerter Löslichkeit wurden dann erhalten, wenn die Flüssigkomponente A komplett bei der Granulation und hierbei nur im Mischer/Granulator und ein Teil der Flüssigkomponente B in der Wirbelschicht zum Einsatz kam. Die Flüssigkomponenten wurde also auf Mischer/Granulator und Wirbelschicht aufgeteilt, wobei in der Wirbelschicht die tensidfreie und filmbildende Flüssigkomponente zum Einsatz kam. Im ergänzende Zumischgranulat, das in dem UWM enthalten war, kamen bei der Herstellung die restlichen Anteile der Flüssigkomponente B zum Einsatz (vgl. UWM IV / Granulat D).

### Beispiel 5:

Jeweils 37,2 g der in den Beispielen 1-4 hergestellten Waschmittel UWM I - UWM IV (UWM I bis III: nicht erfindungsgemäß; UWM IV: erfindungsgemäß) wurden mit 2,8 g eines Tablettensprengmittels auf Cellulosebasis gemäß der europäischen Patentanmeldung EP 0 970 181 B1 zu 40 g schweren Tabletten mit einer Bruchhärte von 40 N verpresst. Es wurden jeweils 5 Tabletten hergestellt.

Zur Bestimmung des Tablettenzerfalles wurde die Tablette mittels einer Vorrichtung so in Wasser von 20°C getaucht, dass sie von allen Seiten Kontakt mit Wasser hatte.

Die Tabletten enthaltend UWM I sowie die Tabletten enthaltend UWM II sowie Tabletten enthaltend UWM III sind im Mittel erst nach 5-6 Minuten zerfallen.

Die Tabletten enthaltend UWM IV zerfielen im Mittel bereits nach 7 Sekunden.

Dies ist ein überraschendes Ergebnis, da UWM IV die deutlich schlechteste Löslichkeit aufwies.

Bei Verpressung der Tabletten auf eine Bruchhärte von 60 N trat bei Tabletten enthaltend UWM I oder UWM II oder UWM III kein Zerfall ein. Entsprechende Tabletten mit UWM IV sind im Mittel schon nach 17 Sekunden zerfallen.

Dieses überraschende Ergebnis zeigt die hervorragende Eignung des UWM IV und des darin inkorporierten Granulates D für die Herstellung von Wasch- und/oder Reinigungsmitteltabletten, die selbst bei hohen Bruchhärten noch einen sehr guten Zerfall zeigen.

Die erfindungsgemäßen Tabletten, die das UWM IV enthalten, zerfallen also bereits in kaltem Wasser außerordentlich schnell und dabei viel schneller als die Tabletten die UWM I bzw. UWM II bzw. UWM III enthalten. Dies ist um so mehr überraschend, als daß das UMW IV die Granulate mit der schlechtesten Löslichkeit enthält.

## Patentansprüche

1. Wasch- und/oder Reinigungsmitteltablette, enthaltend Sprengmittel und Wasch- und/oder Reinigungsmittelgranulate aus einem Verfahren, welches folgende Schritte umfasst:
a) Vermischen und Granulieren einer oder mehrer fester Komponenten mit einer oder mehreren flüssigen Komponenten in einem oder mehreren Mischern/Granulatoren, wobei die flüssige Komponente zumindest anteilsweise Aniontensidsäure enthält,
b) Überführen des in a) angefallenen Granulates in eine Wirbelschicht und Versprühen einer oder mehrer flüssiger Komponenten auf das in der Wirbelschicht gebildete Wirbelbett und weitere Granulation, **dadurch gekennzeichnet, daß**
die in der Wirbelschicht zu versprühenden Komponenten Silikat- und/oder (Co-)Polymerlösungen, jedoch keine Aniontensidsäure enthalten.

2. Tablette nach Anspruch 1, **dadurch gekennzeichnet, daß** die flüssigen Komponente des Verfahrensschrittes a ausgewählt ist aus der Gruppe flüssige Bindemittel, Lösungen von wasch- und/oder reinigungsaktiven Substanzen und/oder Dispersionen, vorzugsweise Suspensionen und/oder Emulsionen, von wasch- und/oder reinigungsaktiven Substanzen, wobei die enthaltene Aniontensidsäure in sehr vorteilhafter Weise eine oder mehrere Substanz(en) aus der Gruppe der Carbonsäuren, der Schwefelsäurehalbester und der Sulfonsäuren, in besonders vorteilhafter Weise aus der Gruppe der Fettsäuren, der Fettalkylschwefelsäuren und der Alkylarylsulfonsäuren, insbesondere aus der Gruppe der C₈₋₁₆-, insbesondere der C₉₋₁₃-Alkylbenzolsulfonsäuren enthält.

3. Tablette nach Anspruch 1 oder 2, **dadurch gekennzeichnet, daß** die festen Komponenten für den Einsatz in Wasch- und/oder Reinigungsmitteln geeignet sind und vorzugsweise zumindest anteilsweise Substanzen ausgewählt aus der Gruppe der Gerüststoffe, Polymere und/oder Neutralsalze eingesetzt werden, wobei vorteilhafterweise wenigstens anteilsweise feste Neutralisationsmittel, in sehr vorteilhafterweise eine oder mehrere Substanzen aus der Gruppe Natriumcarbonat, Natriumhydroxid, Natriumsesquicarbonat, Kaliumhydroxid und/oder Kaliumcarbonat enthalten sind.

4. Tablette nach einem der Ansprüche 1 bis 3, **dadurch gekennzeichnet, daß** die festen Komponenten Feststoffe aus der Gruppe der Silikate, Aluminiumsilikate, Sulfate, Citrate und/oder Phosphate enthalten.

5. Tablette nach einem der Ansprüche 1 bis 4, **dadurch gekennzeichnet, daß** in dem Herstellungsverfahren der Wasch- und/oder Reinigungsmittelgranulate die Verdüsung entgegen der Durchflussrichtung der Wirbelschicht und/oder im fluidisierten Produkt erfolgt.

6. Tablette nach einem der Ansprüche 1 bis 4, **dadurch gekennzeichnet, daß** in dem Herstellungsverfahren der Wasch- und/oder Reinigungsmittelgranulate die Düsen des Wirbelschichtgranulators oberhalb des fluidisierten Produktes positioniert sind und in Durchflussrichtung der Wirbelschicht sprühen.

7. Tablette nach einem der vorigen Ansprüche 1 bis 6, **dadurch gekennzeichnet, daß** es weitere teilchenförmige Wasch- und/oder Reinigungsmittelbestandteile enthält, insbesondere Aniontensid-haltige und/oder Wasserglas/(Co-)Polymer-haltige Zumischgranulate.

8. Tablette nach Anspruch 7, **dadurch gekennzeichnet, dass** es sich bei den Zumisch-Granulaten um Sprühtrocknungsprodukte handelt.

9. Tablette nach Anspruch 7, **dadurch gekennzeichnet, dass** es sich bei den Zumisch-Granulaten um weitere(s), entsprechend dem im Anspruch 1 beschriebenen Verfahren hergestellten Granulat(e) handelt.

10. Tablette nach Anspruch 9, **dadurch gekennzeichnet, daß** als Flüssigkomponenten bei der Herstellung des Zumischgranulates nur wässerige Lösungen von Komponenten aus Wasch - und Reinigungsmitteln zum Einsatz kommen, wobei insbesondere Silikat- und/oder (Co-)Polymerlösungen besonders bevorzugt sind.

11. Tablette nach einem der Ansprüche 1 bis 10, **dadurch gekennzeichnet, daß** es mindestens ein quellfähiges Desintegrationshilfsmittel enthält.

12. Tablette einem der Ansprüche 1 bis 11, daß es ein quellfähiges Desintegrationshilfsmittel auf Cellulosebasis, vorzugsweise in granularer, cogranulierter oder kompaktierter Form, in Mengen von 0,5 bis 10 Gew.-%, vorzugsweise von 1 bis 8 Gew.-% und insbesondere von 2 bis 7 Gew.-%, jeweils bezogen auf das Formkörpergewicht, enthält.

13. Tablette nach einem der Ansprüche 1 bis 12, **dadurch gekennzeichnet, daß** es zumindest anteilsweise von einer wasserlöslichen Umhüllung umgeben ist, wobei diese ein oder mehrere Materialien aus der Gruppe (gegebenenfalls acetalisierter) Polyvinylalkohol (PVAL) und/oder PVAL-Copolymere, Polyvinylpyrrolidon, Polyethylenoxid, Polyethylenglykol, Gelatine, Cellulose und deren Derivate, insbesondere MC, HEC, HPC, HPMC und/oder CMC, und/oder Copolymere sowie deren Mischungen, umfaßt.

14. Verwendung von Tabletten nach einem der Ansprüche 1 bis 13 in Haushaltswaschmaschinen und/oder -Geschirrspülmaschinen.

15. Verwendung von Tabletten nach einem der Ansprüche 1 bis 13 als einspülkammerdosierbare Waschmitteltabletten für Haushaltswaschmaschinen.

## Claims

1. A washing and/or cleaning agent tablet, containing a disintegrant and washing and/or cleaning agent granules from a method which comprises the following steps:
a) mixing and granulating one of more solid components with one or more liquid components in one or more mixers/granulators, wherein the liquid component contains at least partly an anionic surfactant acid,
b) transferring the granulates produced in a) into a fluidized layer and spraying one of more liquid components on the fluidized bed formed in the fluidized layer and further granulating, **characterized in that** the components to be sprayed in the fluidized layer contain silicate and/or (co)polymer solutions, but no anionic surfactant acid.

2. The tablet according to claim 1, **characterized in that** the liquid component of process step a) is selected from the group of liquid binders, solutions of substances and/or dispersions with washing and/or cleaning action, preferably suspensions and/or emulsions of substances with washing and/or cleaning action, wherein the contained anionic surfactant acid contains in a highly advantageous way, one or more substances from the group of carboxylic acids, sulfuric acid semi-esters and sulfonic acids, in a particularly advantageous way, from the group of fatty acids, fatty alkylsulfuric acids and alkylarylsulfonic acids, in particular from the group of C₈-C₁₆ alkylbenzene-sulfonic acids, in particular C₉-C₁₃ alkylbenzene-sulfonic acids.

3. The tablet according to claim 1 or 2, **characterized in that** the solid components are suitable for application in washing and/or cleaning agents and preferably substances selected from the group of builders, polymers and/or neutral salts are at least partly used, wherein, advantageously, at least partly solid neutralization agents, one or more substances in a very advantageous way from the group of sodium carbonate, sodium hydroxide, sodium sesquicarbonate, potassium hydroxide and/or potassium carbonate are contained.

4. The tablet according to any of claims 1 to 3, **characterized in that** the solid components contain solids from the group of silicates, aluminium silicates, sulfates, citrates and/or phosphates.

5. The tablet according to any of claims 1 to 4, **characterized in that** in the method for preparing washing and/or cleaning agent granulates, the atomization takes place against the direction of flow of the fluidized layer and/or in the fluidized product.

6. The tablet according to any of claims 1 to 4, **characterized in that** in the method for preparing washing and/or cleaning agent granulates, the nozzles of the fluidized layer granulator are positioned above the fluidized product and spray in the direction of flow of the fluidized layer.

7. The tablet according to any of the preceding claims 1 to 6, **characterized in that** it contains further particulate washing and/or cleaning agent components, in particular additive granulates containing anionic surfactant and/or water glass/(co)polymer.

8. The tablet according to claim 7, **characterized in that** as for the additive granulates, these are spray-drying products.

9. The tablet according to claim 7, **characterized in that** as for the additive granulates, these are further granulate(s) produced according to the method described in claim 1.

10. The tablet according to claim 9, **characterized in that** only aqueous solutions of components from washing and cleaning agents are used as liquid components in the preparation of the additive granulates, wherein in particular silicate and/or (co)polymer solutions are more preferred.

11. The tablet according to any of claims 1 to 10, **characterized in that** it contains at least one swellable disintegration adjuvant.

12. The tablet according to any of claims 1 to 11, **characterized in that** it contains a swellable disintegration adjuvant based on cellulose, preferably in a granular, co-granulated or compacted form, in amounts from 0.5 to 10% by weight, preferably from 1 to 8% by weight, and in particular from 2 to 7% by weight, each based on the molded body weight.

13. The tablet according to any of claims 1 to 12, **characterized in that** it is at least partly surrounded by a water-soluble envelope, wherein the latter comprises one or more materials from the group of (possibly acetalized) polyvinyl alcohol (PVAL) and/or PVAL copolymers, polyvinylpyrrolidone, polyethylene oxide, polyethylene glycol, gelatin, cellulose and its derivatives, in particular MC, HEC, HPC, HPMC and/or CMC, and/or copolymers as well as their mixtures.

14. The use of tablets according to any of claims 1 to 13, in domestic washing machines and/or dishwashers.

15. The use of tablets according to any of claims 1 to 13, as washing agent tablets which may be dosed in the rinsing chamber, for domestic washing machines.

## Revendications

1. Comprimé d'agent de lavage et/ou de nettoyage, contenant des agents de désintégration et des granulats d'agent de lavage et/ou de nettoyage provenant d'un procédé comprenant les étapes suivantes :
a) mélange et granulation d'un ou de plusieurs composants solides comprenant un ou plusieurs composants liquides dans un ou plusieurs mélangeur(s)/granulateur(s), le composant liquide contenant, du moins en partie, un acide tensioactif anionique,
b) transfert du granulat formé dans a) dans un lit fluidisé et pulvérisation d'un ou de plusieurs composants liquides sur le lit fluidisé formé dans la couche fluidisée et granulation ultérieure, **caractérisé**
**en ce que** les composants à pulvériser dans la couche fluidisée contiennent des solutions de silicate et/ou de (co)polymère(s), mais pas d'acide tensioactif anionique.

2. Comprimé selon la revendication 1, **caractérisé en ce que** le composant liquide de l'étape de procédé a) est choisi dans le groupe formé par les liants liquides, les solutions de substances actives en lavage et/ou en nettoyage et/ou les dispersions, de préférence des suspensions et/ou des émulsions, de substances actives en lavage et/ou en nettoyage, l'acide tensioactif contenu contenant de manière très avantageuse une ou plusieurs substance(s) du groupe des acides carboxyliques, des semi-esters de l'acide sulfurique et des acides sulfoniques, de manière particulièrement avantageuse du groupe des acides gras, des acides alkylsulfuriques gras et des acides alkylarylsulfoniques, en particulier du groupe des acides C₈₋₁₆-alkylbenzènesulfoniques, en particulier des acides C₉₋₁₃-alkylbenzènesulfoniques.

3. Comprimé selon la revendication 1 ou 2, **caractérisé en ce que** les composants solides sont appropriés pour une utilisation dans des agents de lavage et/ou de nettoyage et on utilise de préférence, du moins en partie, des substances choisies dans le groupes des builders, des polymères et/ou des sels neutres, des agents de neutralisation au moins partiellement solides étant avantageusement contenus, de manière très avantageuse une ou plusieurs substances du groupe carbonate de sodium, hydroxyde de sodium, sesquicarbonate de sodium, hydroxyde de potassium et/ou carbonate de potassium.

4. Comprimé selon l'une quelconque des revendications 1 à 3, **caractérisé en ce que** les composants solides contiennent des solides du groupe des silicates, des silicates d'aluminium, des sulfates, des citrates et/ou des phosphates.

5. Comprimé selon l'une quelconque des revendications 1 à 4, **caractérisé en ce que** dans le procédé de production des granulats d'agent de lavage et/ou de nettoyage, la pulvérisation est réalisée contre le sens d'écoulement de la couche fluidisée et/ou dans le produit fluidisé.

6. Comprimé selon l'une quelconque des revendications 1 à 4, **caractérisé en ce que** dans le procédé de production des granulats d'agent de lavage et/ou de nettoyage, les pulvérisateurs du granulateur en couche fluidisée sont positionnés au-dessus du produit fluidisé et pulvérisent dans le sens d'écoulement de la couche fluidisée.

7. Comprimé selon l'une quelconque des revendications précédentes 1 à 6, **caractérisé en ce qu'**il contient d'autres constituants d'agents de lavage et/ou de nettoyage sous forme de particules, en particulier des granulats à mélanger contenant des agents tensioactifs anioniques et/ou contenant du verre soluble/un(des) (co)polymère(s).

8. Comprimé selon la revendication 7, **caractérisé en ce qu'**il s'agit, pour les granulats à mélanger, de produits séchés par pulvérisation.

9. Comprimé selon la revendication 7, **caractérisé en ce qu'**il s'agit, pour les granulats à mélanger, d'un autre/d'autres granulat(s) produit(s) selon le procédé décrit dans la revendication 1.

10. Comprimé selon la revendication 9, **caractérisé en ce qu'**on utilise comme composants liquides lors de la préparation du granulat à mélanger uniquement des solutions aqueuses de composants d'agents de lavage et de nettoyage, où les solutions de silicate et/ou de (co)polymère(s) sont particulièrement préférées.

11. Comprimé selon l'une quelconque des revendications 1 à 10, **caractérisé en ce qu'**il contient au moins un builder de désintégration apte au gonflement.

12. Comprimé selon l'une quelconque des revendications 1 à 11, **caractérisé en ce qu'**il contient un builder de désintégration apte au gonflement à base de cellulose, de préférence sous forme granulaire, cogranulée ou compactée en des quantités de 0,5 à 10% en poids, de préférence de 1 à 8% en poids et en particulier de 2 à 7% en poids, à chaque fois par rapport au poids du corps façonné.

13. Comprimé selon l'une quelconque des revendications 1 à 12, **caractérisé en ce qu'**il est entouré, du moins en partie, par un enrobage soluble dans l'eau, où celui-ci comprend un ou plusieurs matériaux du groupe comprenant le poly(alcool vinylique) (le cas échéant acétalisé) (PAV) et/ou les copolymères de PAV, la polyvinylpyrrolidone, le poly(oxyde d'éthylène), le polyéthylèneglycol, la gélatine, la cellulose et ses dérivés, en particulier la MC, la HEC, la HPC, la HPMC et/ou la CMC, et/ou des copolymères ainsi que leurs mélanges.

14. Utilisation de comprimés selon l'une quelconque des revendications 1 à 13 dans des lave-linge et/ou des lave-vaisselle domestiques.

15. Utilisation de comprimés selon l'une quelconque des revendications 1 à 13 comme comprimés d'agent de lavage dosables dans le compartiment à détergent pour des lave-linge domestiques.
